# FASCICULE DE BREVET EUROPEEN

(11) **EP 2 864 159 B1**
(45) Date de publication et mention de la délivrance du brevet: **14.03.2018**
(21) Numéro de dépôt: 13744593.8
(22) Date de dépôt: 19.06.2013
(51) Int. Cl.: B60R 7/04, B60R 21/02, B60N 2/42

(54) **DISPOSITIF POUR LE RANGEMENT D'OBJETS DANS UN VÉHICULE ET VÉHICULE CORRESPONDANT**
VORRICHTUNG ZUM VERSTAUEN VON GEGENSTÄNDEN IN EINEM FAHRZEUG UND ENTSPRECHENDES FAHRZEUG
DEVICE FOR STOWING OBJECTS IN A VEHICLE AND CORRESPONDING VEHICLE

(30) Priorité: 20.06.2012 FR 1255803
(43) Date de publication de la demande: 29.04.2015
(73) Titulaire: Renault S.A.S., 92100 Boulogne-Billancourt (FR)
(72) Inventeur: BOUILLON, Jean-Charles, F-78940 La Queue Lez Yvelines (FR)
(86) Numéro de dépôt international: PCT/FR2013/051427
(87) Numéro de publication internationale: WO 2014/009622

(56) Documents cités:
- WO-A1-99/35001
- WO-A1-2012/007678
- DE-A1-102006 049 002
- DE-A1-102008 022 417
- FR-A1- 2 383 045
- FR-A1- 2 908 363

## Description

L'invention concerne un dispositif pour le rangement d'objets dans un véhicule automobile. Elle concerne également le véhicule correspondant.

### 1. Domaine de l'invention

La présente invention concerne le domaine des véhicules automobiles, notamment leurs aménagements intérieurs. Elle vise en particulier le rangement et la retenue d'objets sous les sièges des véhicules, notamment ceux disposés à l'arrière.

### 2. Art antérieur

La tendance actuelle dans le domaine des véhicules automobiles est de proposer de plus en plus de volumes de rangement. Depuis quelques années déjà sont apparus des véhicules électriques et hybrides pouvant combiner plusieurs sources d'énergies. Ces véhicules sont soit dépourvus de réservoir de carburant, soit équipés d'un réservoir qui est déplacé ailleurs dans le véhicule ou de petite dimension. Les sièges, notamment les sièges arrières sont alors décalés par rapport au plancher, ce qui a pour effet de libérer de l'espace. Un véhicule de ce genre comprend un plancher, au moins un siège muni d'une assise, le siège étant monté sur au moins deux pieds et une portion du plancher disposée suivant une direction verticale. Un espace est également défini sous l'assise et délimité par au moins un premier côté formé par les deux pieds, et des deuxième et troisième côtés formés par un pied et la portion de plancher.

Divers dispositifs de rangement d'objets installés sous les sièges des véhicules automobiles sont connus.

Cependant, le problème que pose ce genre de dispositif est que leur forme principalement prismatiques ou parallélépipédiques ne n'ont pas un bon ratio entre le volume occupé et le volume de rangement. D'autre part, ils ne permettent pas de ranger des objets de toute taille en dessous des sièges, ni de les retenir efficacement dans les espaces libres. De plus, certains de ces dispositifs apportent du poids au véhicule et une fois déployés ne permettent pas à un occupant de s'installer dans l'habitacle.

Le document WO2012/007678 A1 décrit un dispositif conforme au préambule de la revendication 1.

### 3. Objectifs de l'invention

L'invention a notamment pour objectif de pallier tout ou partie des inconvénients de l'art antérieur.

Plus précisément, un objectif de l'invention est de fournir un dispositif pour le rangement permettant d'augmenter et maximiser la surface disponible dans un véhicule avec un ajout faible de masse.

Un autre objectif de l'invention est de proposer une solution qui soit simple, universelle et peu coûteuse.

### 4. Résumé de l'invention

Ces objectifs sont atteints grâce à un dispositif pour le rangement d'objets dans un véhicule automobile avec les caractéristiques de la revendication 1. Ainsi, le volume de rangement est maximisé en installant un filet élastique très ingénieux, léger et non encombrant. Un tel dispositif n'ajoute peu de poids au véhicule ce qui n'est pas négligeable pour la consommation du véhicule. De plus, un tel agencement avec un cable élastique permet de faciliter la mise en place d'objets dans l'espace de rangement obtenu.

Selon un mode de réalisation, le dispositif comprend au moins une structure rigide disposée sur au moins un desdits côtés, ladite structure étant destinée à être fixée à au moins un pied du siège et au plancher et le filet est monté sur la structure pour retenir des objets longs aussi bien que hauts.

Une structure de la sorte permet de renforcer l'effet de barrière du filet sans pour autant alourdir le poids du véhicule.

De manière avantageuse, la structure est formée de deux supports fixés l'un à l'autre, chaque support comprenant au moins un premier et deuxième montants liés par une de leurs extrémités à une base.

De la sorte, la structure est plus robuste tout en étant légère.

Préférentiellement, chaque premier montant du support comprend une portion formant, une fois les deux supports assemblés, une section partiellement complémentaire avec l'un des pieds du siège.

Cette configuration permet d'une part de s'adapter à n'importe quelle forme de pied et d'autre part de faciliter le montage du dispositif.

Selon une caractéristique importante, la base du support forme une butée présentant une hauteur comprise entre 15 et 50 mm pour retenir les charges par exemple.

Selon une variante, la structure est formée d'une seule pièce comprenant au moins des première, deuxième et troisième parties sensiblement en forme de U. De la sorte, on obtient un gain de temps dans la fabrication de la structure qui n'est formée que d'un seul tenant.

L'invention concerne également un procédé de montage avec les caractéristiques de la revendication 7. L'invention concerne également un véhicule avec les caractéristiques de la revendication 8.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une vue partielle et en perspective d'un véhicule automobile comprenant au moins un dispositif pour le rangement d'objets dans ledit véhicule selon l'invention ;
- La figure 2 est une vue éclatée du dispositif pour le rangement d'objets ;
- La figure 3 représente un exemple de réalisation du dispositif selon la figure 2 ;
- La figure 4 est une vue de détails du dispositif pour le rangement selon l'invention.

### 6. Description détaillée

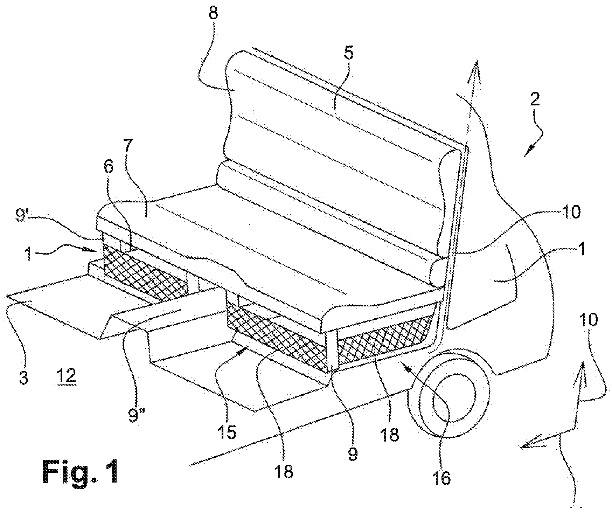

La figure 1 représente schématiquement et partiellement un véhicule 2 automobile dans lequel est installé un dispositif 1 pour le rangement d'objets.

Ce véhicule 2 automobile comprend de façon connue un plancher 3, au moins un siège 5 et un espace libre 6 dans lequel peuvent être entreposés des objets.

Dans la présente description, on entend par plancher 3, la tôle constituant la carrosserie du véhicule 2 et qui est recouverte en tout ou partie d'une moquette.

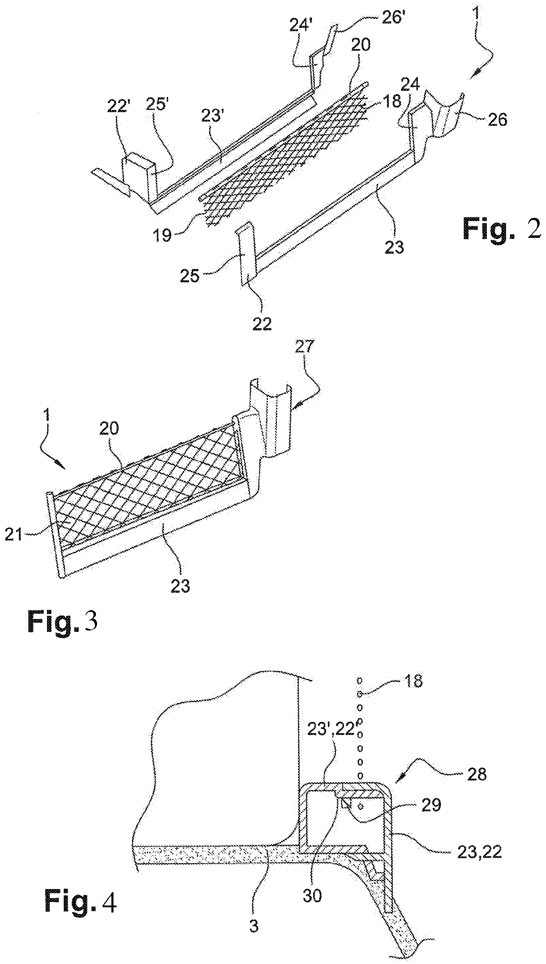

Le siège 5 comprend une assise 7 et un dossier 8. Le siège 5 est monté sur au moins deux pieds (un premier pied 9 et un deuxième pied 9') et une portion du plancher 4 (illustrée sur la figure 2) disposée suivant une direction sensiblement verticale 10. Cette dernière est sensiblement perpendiculaire à une direction 11 principale longitudinale que présente le véhicule 2. La portion du plancher 4 permet de faire la séparation entre l'habitacle 12 et le coffre 13 du véhicule 2 par exemple. En particulier, le siège 5 du véhicule 2 est un siège 5 arrière ou une banquette.

Sur la figure 1, l'espace libre 6 est défini sous l'assise 7 et est délimité par au moins un premier côté 15 formé par les deux pieds 9, 9'. Ce premier côté 15 est par exemple prévu à l'avant du siège 5. Dans le présent mode de réalisation, un pied central 9" (il peut d'agir d'un ou deux pieds centraux) est monté à l'avant de l'assise 7. Le pied central 9" permet de séparer le premier côté 15 en deux parties sensiblement symétrique. L'espace libre 6 est également délimité par des deuxième 16 et troisième 17 côtés formés chacun par un pied 9 ou 9' et la portion de plancher 4. Les deuxième 16 et troisième 17 côtés sont en général ceux se trouvant sur les côtés latéraux et accessibles par les portes latérales (non représentées) du véhicule 2.

Selon l'invention, le dispositif 1 pour le rangement d'objets installé dans le véhicule 2 comprend au moins un filet élastique 18 disposé en-dessous de l'assise 7 du siège 5 pour retenir les objets qui y sont installés. Plus précisément, le filet 18 élastique est disposé sur au moins un des premier 15, deuxième 16 et troisième 17 côtés de l'espace libre 6 défini sous l'assise 7 et est fixé au moins à un pied 9,9',9" du siège 5. Le filet 18 élastique est également fixé sur le plancher 3 du véhicule 2.

Le filet 18 élastique est de préférence de forme rectangulaire et comprend quatre bords 19. Il est constitué de mailles. Il est également équipé d'un câble 20 élastique longeant au moins un des bords 19 du filet 18. Le filet 18 est fixé aux pieds 9, 9', 9" et au plancher 3 au moyen, par exemple de vis, d'agrafes ou autres. Sur la figure 1, deux filets 18 sont montés sur le premier côté 15.

Selon un autre mode de réalisation illustrée sur la figure 3 le filet 18 élastique est monté sur la structure 21 rigide. Plus précisément, la structure 21 est formée d'au moins de deux supports 22, 22' (voir figure 2) qui sont fixés l'un à l'autre. Chaque support 22, 22' comprend une base 23, 23' et un premier 24, 24' et deuxième 25, 25' montants. Chaque montant 24, 24', 25, 25' comprend une extrémité liée à la base 23, 23'.

Au moins deux bords 19 du filet 18 sont pincés entre chaque support 22, 22' lorsque ces derniers sont assemblés.

Le premier montant 24, 24' des supports 22, 22' comprend une portion 26, 26' formant une fois les deux supports 22, 22' assemblés, une section 27 partiellement complémentaire avec l'un des pieds 9, 9', 9" du siège 5. La section 27 complémentaire présente, ici, une forme sensiblement en forme de U pour coopérer avec un pied 9, 9', 9" de section quadrangulaire.

Cette structure 21 avec le filet 18 est montée avantageusement sur le premier côté 15. De la sorte lors d'un freinage, les objets placés sur le plancher 3 sont retenus par la structure 21 rigide et le filet 18 peut retenir les petits objets placés en hauteur.

Comme on peut le voir sur la figure 4, la base 23,23' du support 22,22' forme une butée 28 destinée à retenir les objets lourds susceptibles de venir en contact avec celle-ci, par exemple lors d'un freinage. La base 23, 23' présente une hauteur comprise entre 15 et 50 mm. De préférence, la hauteur est de 20 mm. Elle présente aussi une longueur d'environ 20 mm. Toutefois, les deux bases 23,23' de chaque support 22,22' assemblées se présentent sous la forme d'une poutre creuse dont la largeur est comprise entre 15 et 30 mm. De préférence, cette largeur est de 20 mm.

L'assemblage des supports 22, 22' s'effectue, par exemple, par clipsage, à force ou autre moyen de fixation. Avantageusement, un des supports 22, 22' est pourvu de pions 29 qui s'engagent dans des ouvertures 30 complémentaires prévu sur l'autre support 22, 22'. Les supports 22, 22' peuvent être obtenus par moulage. Ils sont composés par exemple de polymère qui apporte de la légèreté à la structure 21. D'autres matériaux légers peuvent aussi être envisagés.

La structure 21 se fixe aux pieds 9, 9', 9" et/ou au plancher 3 du véhicule 2 au moyen de vis, boulon, crochet ou autres. Elle peut être montée dans le véhicule 2 lors de la fabrication de celle-ci en usine ou vendu en kit pour un montage ultérieur.

L'invention concerne également un procédé de montage d'un dispositif 1 pour le rangement d'objets tel que décrit ci-dessus. Ce procédé comprend les étapes suivantes :
- une étape A de mise en place de la section 27 complémentaire formée par les premiers montants 24, 24' (formant une pince) des supports 22, 22' de la structure 21 assemblée ou chaussée autour d'un pied 9, 9', 9" (ici le pied central 9") du siège 5;
- une étape B de rotation de ladite section complémentaire autour dudit pied 9, 9', 9" selon un premier axe X pour placer la structure 21 dans un plan G d'un côté 15, 16,17 ;
- une étape C de fixation au moins du deuxième montant 25, 25' et de la base 23, 23' des supports 22, 22' de la structure 21 assemblée sur un autre pied 9, 9', 9" du siège 5 et au plancher 3. L'assemblage est avantageusement réalisé à l'aide de deux pions sapins rapidement montés.

D'autres procédés de montage peuvent bien évidemment être envisagés.

## Revendications

1. Dispositif (1) pour le rangement d'objets dans un véhicule (2) automobile, ledit dispositif étant équipé :
- d'un plancher (3);
- d'au moins un siège (5) muni d'une assise (7), le siège (5) étant monté sur au moins deux pieds (9, 9', 9" ); et,
- un espace (6) défini sous l'assise (7) et délimité par au moins :
∘ un premier côté (15) formé par les deux pieds (9, 9', 9");
∘ des deuxième (16) et troisième (17) côtés formés par un pied (9, 9', 9") ;
ledit dispositif (1) étant **caractérisé en ce que** le siège (5) est aussi monté sur une portion du plancher (4) disposée suivant une direction verticale (10), **en ce que** l'espace (6) défini sous l'assise (7) est aussi délimité par la portion de plancher (4), **en ce que** le dispositif comprend au moins un filet (18) élastique disposé en-dessous de l'assise (7) pour retenir lesdits objets, et **en ce que** le filet (18) est disposé sur au moins un desdits côtés (15, 16, 17) et fixé au moins à un pied (9, 9', 9") du siège 5 et au plancher (3), ledit filet (18) comprenant un câble (20) élastique longeant au moins un bord (19) du filet (18).

2. Dispositif (1) selon la revendication 1, **caractérisé en ce qu'**il comprend au moins une structure (21, 21') rigide disposée sur au moins un desdits côtés (15, 16, 17), ladite structure (21, 21') étant fixée à au moins un pied (9, 9', 9") du siège (5) et au plancher (3), et le filet (18) étant monté sur la structure (21, 21').

3. Dispositif (1) selon la revendication 2, **caractérisé en ce que** la structure (21, 21') est formée de deux supports (22, 22') fixés l'un à l'autre, chaque support (22, 22') comprenant au moins un premier (24, 24') et deuxième (25, 25') montants liés par une de leurs extrémités à une base (23, 23').

4. Dispositif (1) selon la revendication 3, **caractérisé en ce que** chaque premier montant (24, 24') du support (22, 22') comprend une portion (26, 26') formant, une fois les deux supports (22, 22') assemblés, une section (27) partiellement complémentaire avec l'un des pieds (9, 9', 9") du siège (5).

5. Dispositif (1) selon la revendication 4, **caractérisé en ce que** la base (23, 23') du support (22, 22') forme une butée (28) présentant une hauteur comprise entre 15 et 50 mm.

6. Dispositif (1) selon la revendication 1, **caractérisé en ce que** la structure (21') est formée d'une seule pièce comprenant au moins des premières (31), deuxième (32) et troisième (33) parties sensiblement en forme de U.

7. Procédé de montage d'un dispositif (1) pour le rangement d'objets selon l'une quelconque des revendications 3 à 5, **caractérisé en ce qu'**il comprend les étapes suivantes :
- une étape (A) de mise en place de la section (27) complémentaire formée par les premiers montants (24, 24') des supports (22,22') de la structure (21) assemblée autour d'un pied (9, 9', 9") du siège 5;
- une étape (B) de rotation de ladite section (27) complémentaire autour dudit pied (9, 9', 9") selon un premier axe (X) pour placer la structure (21) dans un plan (G) d'un côté (15, 16, 17) ;
- une étape (C) de fixation au moins du deuxième montant (25, 25') et de la base (23, 23') des supports (22, 22') de la structure (21) assemblée sur un autre pied (9, 9', 9") du siège (5) et au plancher (3).

8. Véhicule (2) automobile **caractérisé en ce qu'**il comprend un dispositif selon l'une quelconque des revendications 1 à 6.

## Patentansprüche

1. Vorrichtung (1) zum Verstauen von Gegenständen in einem Kraftfahrzeug (2), wobei die Vorrichtung ausgestattet ist:
- mit einem Fußboden (3);
- mit wenigstens einem Sitz (5), der mit einem Sitzteil (7) versehen ist, wobei der Sitz (5) auf wenigstens zwei Füßen (9, 9', 9") angebracht ist; und
- mit einem Raum (6), der unter dem Sitzteil (7) definiert ist und begrenzt wird von wenigstens:
∘ einer ersten Seite (15), die von den zwei Füßen (9, 9', 9") gebildet wird;
∘ einer zweiten (16) und einer dritten (17) Seite, die von einem Fuß (9, 9', 9") gebildet werden;
wobei die Vorrichtung (1) **dadurch gekennzeichnet ist, dass** der Sitz (5) auch an einem Teilabschnitt (4) des Fußbodens angebracht ist, der in einer vertikalen Richtung (10) angeordnet ist, dadurch, dass der unter dem Sitzteil (7) definierte Raum (6) auch durch den Fußbodenteilabschnitt (4) begrenzt ist, dadurch, dass die Vorrichtung wenigstens ein elastisches Netz (18) umfasst, das unterhalb des Sitzteils (7) angeordnet ist, um die Gegenstände zurückzuhalten, und dadurch, dass das Netz (18) auf wenigstens einer der Seiten (15, 16, 17) angeordnet ist und an wenigstens einem Fuß (9, 9', 9") des Sitzes (5) und am Fußboden (3) befestigt ist, wobei das Netz (18) ein elastisches Seil (20) umfasst, das entlang wenigstens eines Randes (19) des Netzes (18) verläuft.

2. Vorrichtung (1) nach Anspruch 1, **dadurch gekennzeichnet, dass** sie wenigstens eine starre Struktur (21, 21') umfasst, die auf wenigstens einer der Seiten (15, 16, 17) angeordnet ist, wobei die Struktur (21, 21') an wenigstens einem Fuß (9, 9', 9") des Sitzes (5) und am Fußboden (3) befestigt ist und das Netz (18) an der Struktur (21, 21') angebracht ist.

3. Vorrichtung (1) nach Anspruch 2, **dadurch gekennzeichnet, dass** die Struktur (21, 21') von zwei Abstützungen (22, 22') gebildet wird, die aneinander befestigt sind, wobei jede Abstützung (22, 22') wenigstens einen ersten (24, 24') und einen zweiten (25, 25') Ständer umfasst, die über eines ihrer Enden mit einem Unterteil (23, 23') verbunden sind.

4. Vorrichtung (1) nach Anspruch 3, **dadurch gekennzeichnet, dass** jeder erste Ständer (24, 24') der Abstützung (22, 22') einen Teilabschnitt (26, 26') umfasst, der, nachdem die zwei Abstützungen (22, 22') zusammengebaut worden sind, einen Abschnitt (27) bildet, der zu einem der Füße (9, 9', 9") des Sitzes (5) teilweise komplementär ist.

5. Vorrichtung (1) nach Anspruch 4, **dadurch gekennzeichnet, dass** das Unterteil (23, 23') der Abstützung (22, 22') ein Widerlager (28) bildet, das eine Höhe zwischen 15 und 50 mm aufweist.

6. Vorrichtung (1) nach Anspruch 1, **dadurch gekennzeichnet, dass** die Struktur (21') von einem einzigen Teil gebildet wird, das wenigstens ein erstes (31), ein zweites (32) und ein drittes (33) Teilstück umfasst und im Wesentlichen U-förmig ist.

7. Verfahren zum Einbau einer Vorrichtung (1) zum Verstauen von Gegenständen nach einem der Ansprüche 3 bis 5, **dadurch gekennzeichnet, dass** es die folgenden Schritte umfasst:
- einen Schritt (A) der Anbringung des komplementären Abschnitts (27), der von den ersten Ständern (24, 24') der Abstützungen (22, 22') der zusammengebauten Struktur (21) gebildet wird, um einen Fuß (9, 9', 9") des Sitzes (5) herum;
- einen Schritt (B) der Drehung des komplementären Abschnitts (27) um den Fuß (9, 9', 9") um eine erste Achse (X), um die Struktur (21) in eine Ebene (G) einer Seite (15, 16, 17) zu bewegen;
- einen Schritt (C) der Befestigung wenigstens des zweiten Ständers (25, 25') und des Unterteils (23, 23') der Abstützungen (22, 22') der zusammengebauten Struktur (21) an einem anderen Fuß (9, 9', 9") des Sitzes (5) und am Fußboden (3).

8. Kraftfahrzeug (2), **dadurch gekennzeichnet, dass** es eine Vorrichtung nach einem der Ansprüche 1 bis 6 umfasst.

## Claims

1. Device (1) for stowing objects in a motor vehicle (2), the said device being equipped:
- with a floor (3);
- with at least one seat (5) provided with a seat cushion (7), the seat (5) being mounted on at least two legs (9, 9', 9"); and
- a space (6) defined below the seat cushion (7) and delimited by at least:
∘ a first side (15) formed by the two legs (9, 9', 9");
∘ second (16) and third (17) sides formed by a leg (9, 9', 9");
the said device (1) being **characterized in that** the seat (5) is also mounted on a floor portion (4) arranged in a vertical direction (10), **in that** the space (6) defined below the seat cushion (7) is also delimited by the floor portion (4), **in that** the device comprises at least one elastic net (18) arranged below the seat cushion (7) in order to retain the said objects, and **in that** the net (18) is arranged on at least one of the said sides (15, 16, 17) and fixed at least to a leg (9, 9', 9") of the seat (5) and to the floor (3), the said net (18) comprising an elastic cable (20) running along at least one edge (19) of the net (18).

2. Device (1) according to Claim 1, **characterized in that** it comprises at least one rigid structure (21, 21') arranged on at least one of the said sides (15, 16, 17), the said structure (21, 21') being fixed to at least one leg (9, 9', 9") of the seat (5) and to the floor (3), and the net (18) being mounted on the structure (21, 21').

3. Device (1) according to Claim 2, **characterized in that** the structure (21, 21') is formed by two supports (22, 22') fixed to one another, each support (22, 22') comprising at least a first (24, 24') and second (25, 25') upright which are connected by one of their ends to a base (23, 23').

4. Device (1) according to Claim 3, **characterized in that** each first upright (24, 24') of the support (22, 22') comprises a portion (26, 26') forming, once the two supports (22, 22') have been assembled, a section (27) which is partially complementary with one of the legs (9, 9', 9") of the seat (5).

5. Device (1) according to Claim 4, **characterized in that** the base (23, 23') of the support (22, 22') forms a stop (28) having a height of between 15 and 50 mm.

6. Device (1) according to Claim 1, **characterized in that** the structure (21') is formed in a single piece and comprises at least substantially U-shaped first (31), second (32) and third (33) parts.

7. Method of mounting a device (1) for stowing objects according to any one of Claims 3 to 5, **characterized in that** it comprises the following steps:
- a step (A) of placing the complementary section (27) formed by the first uprights (24, 24') of the supports (22, 22') of the assembled structure (21) around a leg (9, 9', 9") of the seat (5) ;
- a step (B) of rotating the said complementary section (27) around the said leg (9, 9', 9") about a first axis (X) in order to place the structure (21) in a plane (G) of a side (15, 16, 17);
- a step (C) of fixing at least the second upright (25, 25') and the base (23, 23') of the supports (22, 22') of the assembled structure (21) to another leg (9, 9', 9") of the seat (5) and to the floor (3).

8. Motor vehicle (2), **characterized in that** it comprises a device according to any one of Claims 1 to 6.
